# EUROPEAN PATENT SPECIFICATION

(11) **EP 3 895 458 B1**
(45) Date of publication and mention of the grant of the patent: **15.11.2023**
(21) Application number: 19816361.0
(22) Date of filing: 12.12.2019
(51) Int. Cl.: H04W 4/50, H04W 4/021, H04W 4/70

(54) **CONTROLLING AN OPERATION MODE OF A COMMUNICATIONS NETWORK**
STEUERUNG EINES BETRIEBSMODUS EINES KOMMUNIKATIONSNETZWERKS
COMMANDE D'UN MODE DE FONCTIONNEMENT D'UN RÉSEAU DE COMMUNICATIONS

(30) Priority: 13.12.2018 EP 18212302
(43) Date of publication of application: 20.10.2021
(73) Proprietor: Koninklijke KPN N.V., 3072 AP Rotterdam (NL); NEDERLANDSE ORGANISATIE VOOR TOEGEPAST- NATUURWETENSCHAPPELIJK ONDERZOEK TNO, 2595 DA 's-Gravenhage (NL)
(72) Inventor: DAS, Kallol, 2742 NL Waddinxveen (NL); LITJENS, Remco, 2352 VH Voorschoten (NL); JORGUSESKI, Ljupco, 2282 TR Rijswijk (NL)
(74) Representative: Wuyts, Koenraad Maria
(86) International application number: PCT/EP2019/084780
(87) International publication number: WO 2020/120647

(56) References cited:
- WO-A1-2017/215401
- US-A1- 2018 287 891

## Description

### FIELD OF THE INVENTION

This disclosure relates to a data processing system for a cellular communications network and to a user equipment configured to connect to such network. In particular, this disclosure relates to a data processing system and user equipment that are configured to control the operation mode of the network based on location information indicating a location of the user equipment.

### BACKGROUND

5G cellular communication technology aims to support different vertical industries with diverse functional and performance requirements. One of the key features that 5G will address is customized wireless access as desired by different vertical industries. To this end, the concept of network slices has been developed by the 3^{rd} Generation Partnership Project (3GPP) and described in document "3GPP TS 23.501 V15.2.0 (2018-06)" hereinafter referred to as "the 5G standard". A network slice may be understood to be a logical network that provides specific network capabilities and network characteristics. A 5G network will be able to instantiate different network slices, wherein each network slice can be tailored to a specific application or specific type of application. Three examples of types of network slices are a first type suitable for handling 5G enhanced Mobile Broadband (eMBB), a second type for handling ultra-reliable low latency communications (URLLC) and a third type for handling massive Internet of Things (MloT). Each of these types would then provide appropriate network capabilities and characteristics. The eMBB type of slice for example provides a high throughput, whereas the URLLC type enables a very low latency. Further, an MloT slice can operate such that a massive number of devices can be supported in an energy efficient way.

Tailoring the network capabilities and characteristics to a specific use case advantageously enables to increase the efficiency with which resources are used. In particular, this tailoring enables to increase the total load that a communications network can handle while still being able to meet given quality of service requirements of different classes of user equipments. To illustrate, we consider a first scenario wherein the communications network is serving, amongst others, a first user equipment belonging to a first class of user equipments and a second user equipment belonging to a second class of user equipments. The first class of user equipments requires to be served with a 90% certainty that the latency is at most 10 ms, whereas the second class of user equipments requires to be served with a 90% certainty that the latency is at most 100 ms. However, in this first scenario, the communications network is not able to differentiate its performance towards separate user equipments, e.g. differentiate by handling data packets for the first user equipment with high priority and data packets for the second user equipment with low priority. In this scenario, when a total load on the communications network reaches a particular value, the latency requirement for the first class of user equipments will not be met, which may cause disfunction of these user equipments. In a second scenario, the same network is serving the same first and second user equipments classes and the
network is indeed able to differentiate its performance, in particular to differentiate its performance by handling data packets for the first class of user equipments with higher priority than the data packets for the second class of user equipments. In this scenario, the ability to differentiate, enables the network to satisfy the latency requirements of both the first and second class user equipments, even when the total load on the network reaches said particular value. The network can namely handle data packets for the first class of user equipments with higher priority, which aids to keep the latency for the first class of user equipments low. Data packets for the second class of user equipments are then handled with lower priority, which increases latency for the second class of user equipments. However, even this increased latency may very well meet the latency requirement of the second class of user equipments. thus, in this second scenario, both classes of user equipments can continue functioning even though the total load on the communications network has reached the particular value. Hence, differentiation of network performance towards specific user equipments enables to increase the efficiency of resource usage.

WO2017/215401A1 discloses a packet processing method, comprising: receiving a first packet sent by a server, wherein the first packet comprises an identifier of a network slice and the identifier of the network slice is used to identify the network slice; determining, by parameter information of the network slice based on the identifier of the network slice; determining, based on the parameter information, a forwarding path from a first edge node of a first network to a second edge node of the first network, wherein the first edge node is configured to send a packet sent by the terminal device to the first network and the second edge node is configured to send the packet sent by the terminal device to a second network; and adding a forwarding resource comprised in the forwarding path to a forwarding resource of the network slice, wherein the forwarding path is used to forward a packet carrying the identifier of the network slice.

US2018/0287891 discloses a system and method for assigning respective quality of service levels to portions of a communication session associated with a service; and based on the respective quality of service levels, provisioning network application resources for a network slice of a network, wherein the network slice comprises a virtual replication of resources of the network that are employable to enable the service, and wherein traffic associated with the communication session is to be directed to the network slice (and wherein the assigning comprises assigning the respective quality of service levels based on location data that represents a geographical location of the user equipment

Despite the above described increased efficiency brought about by the concept of performance differentiation and, in particular, network slices, there is a need in the art for technology that even further increases the efficiency with which resources in a communications network are used.

### SUMMARY

To that end, a data processing system for a cellular communications network is disclosed. The network may be configured to enable communication with a user equipment. The data processing system may be configured to control the operation mode of the communications network to serve the user equipment. Herein the operation mode may be characterized by a set of one or more values of respective one or more network performance parameters. The data processing system may comprise a storage system and a processor. The storage system may be suitable for storing geographical information indicative of a geographical region. The geographical region may be independent of the cellular configuration of the cellular communications network. The processor may be configured to perform a number of steps. One step may comprise obtaining location information indicative of a location of the user equipment. Another step may comprise determining that the location indicated by the location information is within the geographical region indicated by the geographical information that may be stored in the storage system. Yet another step may comprise, based on this determination, controlling the operation mode of the network for serving the user equipment such that the operation mode may be characterized by a first set of one or more values of said respective one or more network performance parameters.

Furthermore, a user equipment is disclosed that may be configured to connect to a cellular communications network for enabling communication with the user equipment. The user equipment may comprise a data processing system that may comprise a storage and a processor. The storage may be suitable for storing geographical information indicative of a geographical region, the geographical region being independent of the cellular configuration of the cellular communications network. The processor may be configured to perform steps of: obtaining location information indicative of a location of the user equipment, determining that the location indicated by the location information is within the geographical region indicated by the geographical information stored in said storage, and, based on this determination, transmitting a request to the communications network for being served by the communications network, wherein the request may comprise an identifier indicating a requested operation mode of the communications network, wherein the requested operation mode may be characterized by a first set of one or more values of respective one or more network performance parameters. The storage may have stored the first identifier in association with the geographical information.

The disclosed data processing systems for the network and of the user equipment enable to improve the efficiency of resource usage in a communications network. The applicants have realized that a user equipment may only require a particular operation mode of the network targeting specific network performance when it is in a restricted geographical region. In such case, providing the same particular operation mode for serving the user equipment when it sits outside of the restricted geographical region may unnecessarily consume resources of the communications network. The data packets for this user equipment, when located outside of the restricted geographical region, are then for example handled by the network with a higher than necessary quality, such as a higher than necessary priority, which decreases the efficiency of resource usage by the communications network.

Therefore, it is beneficial to be able to control the operation mode for serving the user equipment based on the location of the user equipment. The operation mode of the network may be determined by the amount of resources that are used for serving the user equipment and/or determined by the specific network functions that are executed for serving the user equipment and/or by the input parameters that are input into network functions for serving the user equipment. The operation mode of the communications network may influence the Quality of Service (QOS) as experienced by a user of the user equipment. The operation mode may be understood to relate to the functioning of the communications network as opposed to relate to content transmitted by the network.

The user equipment may be understood to be able to control the operation mode of the network in the sense that it can request a particular operation mode characterized by a particular set of values for respective network performance parameters. The disclosed user equipment may advantageously only request a particular operation mode, e.g. may only request access to a particular network slice, if it is indeed in the appropriate geographical region. This advantageously prevents that the user equipment sends a request for an operation mode that will be rejected.

A set of one or more values of the respective one or more network performance parameters may be understood to characterize an operation mode in the sense that the one or more values are target values for the network performance parameters.

Messages described herein that are transmitted between nodes of the communications network or between the user equipment and a node comprising the data processing system of the distribution network, such as a request or a confirmation, may be transmitted in separate data packets.

The geographical region may be defined independent of the cellular configuration of the cellular communications network in the sense that at least a part of a boundary of the geographical region does not coincide with a cell boundary of a cell of the communications network.

The geographical region may be a two-dimensional or three-dimensional region. Likewise, a cell may also be regarded as a two-dimensional region as well as a three-dimensional region.

The geographical information may comprise a plurality of sets of coordinates, wherein each set of coordinates indicates a geographical position. Based on these sets of coordinates, the boundaries of the geographical region, and thus the geographical region itself, can then be defined as line segments connecting the represented geographical positions.

The location information may comprise GPS coordinates.

The one or more network performance parameters may comprise at least one of:
- a parameter indicating an amount of data processed per unit of time by the communications network for serving the user equipment, and
- a parameter indicating a latency induced by the network when the network is serving the user equipment, and
- a parameter indicating a variation in the latency induced by the network when the network is serving the user equipment.

This embodiment enables to tailor important network performance parameters that are targeted for particular users and/or services requested by these users within the geographical region.

In one embodiment of the data processing system of the network, it may be configured to perform steps of
- obtaining updated location information indicative of a further location of the user equipment, and
- determining that the further location is outside of the geographical region, and
- based on this determination, controlling the operation mode of the network for serving the user equipment such that the operation mode may be characterized by a second set of one or more values of said respective one or more network performance parameters, the second set of one or more values being different from the first set of one or more values.

In one embodiment of the user equipment, its data processing system may be configured to perform steps of:
- obtaining updated location information indicative of a further location of the user equipment,
- determining that the further location is outside of the geographical region, and
- based on this determination, transmitting to the communications network a further request for being served by the communications network, wherein the further request may comprise a second identifier indicating a requested second operation mode of the communications network, wherein the second requested operation mode may be characterized by a second set of one or more values of said respective one or more network performance parameters, different from the first set. The storage may have stored the second identifier.

These embodiments advantageously allow to serve the user equipment also when it sits outside of the geographical region. The operation mode characterized by the second set of values may be understood to be a default and/or fallback operation mode for serving the user equipment.

The first and second set of values may differ in the sense that at least one parameter may be differently valued in the first set than in the second set. The operation mode characterized by the first set of values may be understood to be more favorable or less favorable from the perspective of the user equipment. For example more (less) favorable in the sense that the communications network induces a lower (higher) latency while serving the user equipment.

The communications network may be configured to execute a first set of network functions that, when executed for serving the user equipment, causes the operation mode for serving the user equipment to be characterized by the first set of one or more values. Then, the step of controlling the operation mode such that it may be characterized by the first set of one or more values, may comprise causing the execution of the first set of network functions.

Furthermore, the communications network may be configured to execute a second set of network functions that, when executed for serving the user equipment, causes the operation mode for serving the user equipment to be characterized by the second set of one or more values. Then, a step of controlling the operation mode such that it may be characterized by the first set of one or more values, may comprise causing the execution of the second set of network functions.

The first and second set of network functions may have network functions in common, such as a common Access and Mobility Management Function (AMF).

The network functions may be virtualized network functions and the first set of virtualized network functions, when executed, may constitute a first network slice instance representing a first virtual network. If the network is configured to execute the second set of network functions, the second set of virtualized network functions, when executed, may constitute a second network slice instance representing a second virtual network. This virtualization obviates the need to implement dedicated hardware components for executing a set of network functions.

The network using the first set of network functions may comprise the network executing the first set of virtual network functions herewith constituting the first network slice instance representing the first virtual network.

In one embodiment, controlling the operation mode of the network may comprise granting the user equipment access to a particular network slice. The process of granting or denying access to a slice is described in the 5G standard ( 3GPP TS 23.501 V15.2.0 (2018-06)).

In one embodiment, the operation mode characterized by said first set of one or more values, may be identified by a first identifier. In this embodiment, the data storage may be suitable for storing the geographical information in association with the first identifier. Furthermore, the step of controlling the operation mode of the communications network may comprise transmitting the first identifier to the user equipment.

By sending the first identifier to the user equipment, the communications network may be understood to enable the user equipment to use the identifier to request the communications network to serve the user equipment with an operation mode characterized by the first set of values for the network performance parameters.

In one embodiment, the data processing system of the communications network may be configured to perform steps of receiving from the user equipment a request for being served by the communications network, the request comprising the first identifier, and, based on the first identifier, controlling the operation mode such that it may be characterized by the first set of one or more values.

In one embodiment of the data processing system for the communications network, the step of obtaining location information may comprise at least one of (i) receiving the location information, e.g. in the form of GPS coordinates, from the user equipment, and (ii) receiving the location information from a local network to which the user equipment may be connected; and (iii) determining the location information based on parameters measured by the communications network.

In one embodiment of the user equipment, the step of obtaining location information may comprise determining the location information using a Global Positioning system, thus may comprise determining the location information based on signals received from one or more satellites. These embodiments enable to determine the location information in a convenient manner.

The data processing system for the communications network and/or the data processing system of the user equipment may be configured to perform steps of obtaining accuracy information indicating the accuracy of the location information and, based on the accuracy information, determining that the location indicated by the location information is within or outside of said geographical region. Examples of accuracy information are a standard deviation of the location estimate and a Geometric Dilution of precision (GDOP).

Such data processing systems improve the decision how to control the operation mode of the network. The accuracy information may be understood to indicate the degree to which the location information indicates the actual location of the user equipment. The accuracy information may be obtained similarly as the location information, e.g. received from the user equipment.

The location information may comprise an indication whether a device associated with the geographical region has detected a presence of the user equipment. Determining that the location of the user equipment is within or outside of, respectively, the geographical region may then be performed by, based on said indication, determining that the device has or has not, respectively, detected the user equipment. Additionally or alternatively, the location information may comprise an indication whether the user equipment has detected a presence of a device associated with the geographical region. Determining that the location of the user equipment is within or outside of, respectively, the geographical region may then be performed by, based on said indication, determining that user equipment has or has not, respectively, detected the device.

This embodiment allows to determine that the UE is within the geographical region by simply checking whether the UE has detected the device or whether the device has detected the UE.

It should be appreciated that the device detecting the UE and/or the UE detecting the device may be performed by the UE and/or device determining that they are connected to the same local network. Thus, in an example, the device may have detected the UE in the sense that the device has detected that the UE has connected to the same local network to which the device may be connected. Additionally or alternatively, the UE may have detected the device in the sense that the UE has detected that the UE has connected to the same local network to which the device may be connected.

Preferably, the device may be positioned within or at a boundary of the geographical region. The device may be connected to a local communications network, such as a network of an enterprise, and the indication may be received from the local communications network. Further, in this embodiment, the geographical information that may be stored in the storage system of the communications network or user equipment may be an identifier of the device.

In one embodiment, the user equipment may be identified by a user equipment identifier. In this embodiment, the storage system of the data processing system may be suitable for storing the user equipment identifier and the processor of the data processing system may be configured to perform steps of:
- receiving the user equipment identifier from the user equipment;
- determining that a condition for controlling the operation mode for serving the user equipment such that the operation mode may be characterized by the first set of one or more values, is met by determining that the equipment identifier received from the user equipment matches the user equipment identifier stored in the storage system.

This embodiment enables to differentiate the operation mode for serving the first and second user equipment even if these are both positioned within the geographical region. The user equipments may namely each send its equipment identifier to the communications network. The communications network may then have stored only the identifier of the first user equipment in association with the first identifier. Based on this, the operation mode for serving the first user equipment may be controlled such that it may be characterized by a first set of values for the network performance parameters and the operation mode for serving the second user equipment may then be controlled such that it may be characterized by another set of values for the network performance parameters.

One aspect of this disclosure relates to a computer-implemented method for use in a cellular communications network configured to enable communication with a user equipment. The method may comprise a number of steps. One step may comprise obtaining location information indicative of a location of the user equipment. Another step may comprise determining that the location indicated by the location information may be within a geographical region indicated by geographical information that may be stored in a storage of a data processing system for the network, the geographical region being independent of the cellular configuration of the cellular communications network. Another step may comprise, based on this determination, controlling the operation mode of the communications network for serving the user equipment such that the operation mode may be characterized by a first set of one or more values of said respective one or more network performance parameters. The method may further comprise any of the steps described herein that may be performed by a data processing system, in particular by a data processing system for a communications network.

One aspect of this disclosure relates to a computer-implemented method for use in a user equipment configured to connect to a cellular communications network for enabling communication with the user equipment. The method may comprise a number of steps. One step may comprise obtaining location information indicative of a location of the user equipment. Another step may comprise determining that the location indicated by the location information is within a geographical region indicated by the geographical information stored in a storage of the user equipment, the geographical region being independent of the cellular configuration of the cellular communications network. Another step may comprise, based on this determination, transmitting a request to the communications network for being served by the communications network, wherein the request may comprise a first identifier indicating a requested operation mode of the communications network, wherein the requested operation mode may be characterized by a first set of one or more values of respective one or more network performance parameters. The method may further comprise any of the steps described herein that are performed by a data processing system, in particular by a data processing system of a user equipment.

One aspect of this disclosure relates to a computer program comprising instructions which, when the program is executed by a data processing system, cause the data processing system to perform any step described herein that may be performed by a data processing system.

On aspect of this disclosure relates to a node of a communications network, the node comprising a data processing system for a communications network as described herein.

On aspect of this disclosure relates to a communications network, the communications network comprising a data processing system for a communications network as described herein.

On aspect of this disclosure relates to a transitory or non-transitory computer-readable medium comprising instructions which, when executed by a data processing system, cause a data processing system to perform one or more of the steps as described herein that can be performed by a data processing system.

On aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor may be configured to perform one or more of the steps described herein that can be performed by a data processing system.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which may comprise one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the existing data processing systems or be stored upon manufacturing of these systems.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 illustrates an example of a cellular communications network;
FIG. 2 illustrates a method for the communications network according to an embodiment;
FIG. 3 illustrates a method for the user equipment according to an embodiment;
FIG. 4 illustrates a more detailed embodiment of a method;
FIG. 5 illustrates how accuracy information may be used in one embodiment;
FIG. 6 illustrates how a device associated with the geographical region may be used in one embodiment;
FIG. 7 depicts the 5G System architecture in a non-roaming case;
FIG. 8 illustrates how network functions may communicate with each other;
FIG. 9 illustrates a cellular communications network as well as geographical regions;
FIG. 10 illustrates a data processing system according to an embodiment.

### DETAILED DESCRIPTION OF THE DRAWINGS

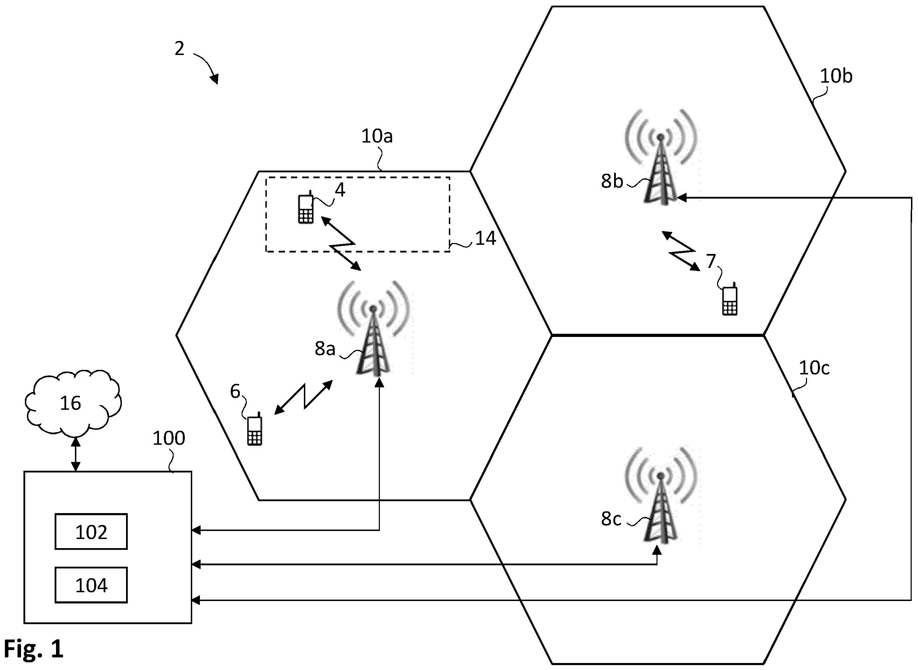

FIG. 1 schematically illustrates an example of a cellular communications network 2. The communications network 2 comprises a radio access network 8 comprising a number of nodes 8a, 8b, 8c. The nodes 8a, 8b, 8c are configured to wirelessly communicate with user equipments 4, 6 so that these can connect to the communications network 2. The area in which a user equipment can communicate with a particular node is typically referred to as the coverage area or cell of that particular node. In FIG. 1, cell 10a is the coverage area of node 8a, cell 10b is the coverage area of node 8b and cell 10c is the coverage area node 8c. User equipments 4 and 6 are in cell 10a and may thus be able to wirelessly connect to the communications network 2 by wirelessly communicating with node 8a, whereas user equipment 7 is in cell 10b and may thus be able to wirelessly connect to the communications network 2 by wirelessly communicating with node 8b. In FIG. 1, the cells 10 are depicted as neatly bordered hexagons, however, in reality, cells are much more erratic, not least because local factors can greatly influence the ability of a user equipment and node 8 to communicate with each other. If the user equipment is at a location at which it cannot communicate well enough with a node, then that location is by definition outside of the coverage area and outside of the cell of that node. In practice, cells can overlap each other.

The radio access network 8 may comprise any type of network, such as 2G, 3G, 4G, 5G, or further generations of radio access networks, or any combination of them (heterogeneous network). Some examples of radio access networks include GERAN (GSM/EDGE), UTRAN (UMTS), E-UTRAN (LTE), NR (5G) and WiFi.

The communications network 2 further comprises a data processing system 100, which may implemented in the core network of the communications network 2. The core network, and thus the data processing system 100, may be connected to a further network 16 such as the internet.

A user equipment as referred to herein may be understood to be any device that can wirelessly access the communications network 2, e.g. that can connect to a node 8 of the radio access network. A user equipment may be identified by a subscriber identification module (SIM) or universal subscriber identity module (USIM), based on which communications network 2 is able to recognize the user equipment. Examples of user equipments are mobile phones, tablet computers, but also sensor devices.

The data processing system 100 is configured to control the operation mode of the communications network for serving the user equipment. Such an operation mode is characterized by a set of one or more values of respective one or more network performance parameters. The network performance parameters may include at least one of the following group of parameters (i-v):
(i) A parameter indicating an amount of data processed per unit of time by the communications network for serving the user equipment. This amount may also be referred to as throughput.
(ii) A parameter indicating a latency induced by the network when the network is serving the user equipment.
(iii) A parameter indicating an amount of data per unit of time that has been successfully transmitted to and/or received from the user equipment.
(iv) A parameter indicating a probability that the latency induced by the network when the network is serving the user equipment is lower or higher than a threshold value.
(v) A parameter indicating a computational capacity that is reserved for serving the user equipment.

In an example a first operation mode is characterized by a latency parameter in the sense that an average latency of transmitted information is within a range of 8-15 ms and a second operation mode by the same latency parameter in the sense that such average latency is with a range of 80-100 ms.

The data processing system 100 comprises a storage system 104 and a processor 102. The storage system is suitable for storing geographical information indicative of a geographical region 14. The geographical region 14 is independent of the cellular configurations of the communications network 2. The geographical region may be defined as a part of cell. The geographical region may also be defined such that it overlaps with several cells of the communications network. The geographical region can thus be defined as desired. In another example, the geographical region 14 is a particular room inside a building, or the premises of a company or factory.

The table below illustrates an example of geographical information respectively indicating two regions A and B. Each region is defined by four geographical points, wherein each point is indicated by a latitude and a longitude parameter. Each region may then be the area that is enclosed by boundaries connecting these point. Alternatively each region may be the area outside of this enclosed area. In the latter, region A may be understood to be defined negatively as will be explained below..

| **Area** | **Latitude (decimal degrees)** | | **Longitude (decimal degrees)** | |
|---|---|---|---|---|
| A | | 52.342334 | | 4.833081 |
| | | 52.342541 | | 4.828133 |
| | | 52.345277 | | 4.827927 |
| | | 52.345354 | | 4.833171 |
| B | | 52.380648 | | 4.640442 |
| | | 52.380537 | | 4.640274 |
| | | 52.380722 | | 4.639953 |
| | | 52.380822 | | 4.640126 |

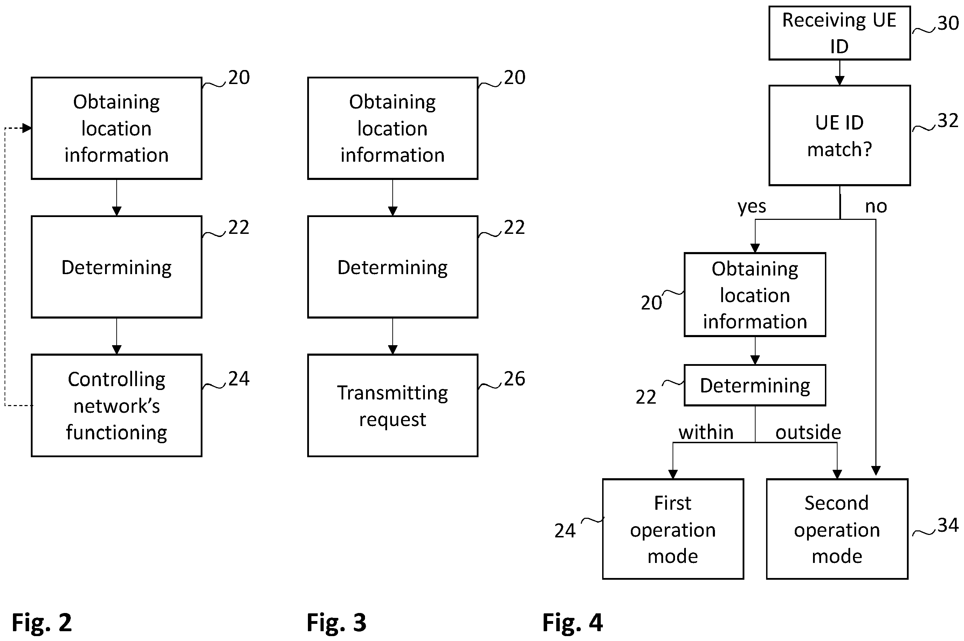

The processor 102 of the data processing system 100 is configured to perform a number of steps that are depicted in FIG. 2. Step 20 comprises obtaining location information indicative of a location of the user equipment 4. This step may be performed using known methods for determining the location of a user equipment, such as triangulation methods. As shown in FIG. 1, user equipment 4 is within the geographical region 14. Step 22 comprises determining that the location indicated by the location information is within the geographical region 14 indicated by the geographical information. Step 24 comprises, based on this determination, controlling the operation mode of the network for serving the user equipment such that the operation mode is characterized by a first set of one or more values of said respective one or more network performance parameters. In one example, controlling the network's operation mode entails granting access to a particular network slice as defined in the 5G standard ( 3GPP TS 23.501 V15.2.0 (2018-06)). As indicated by the dashed line, preferably, the processor 102 performs these steps repeatedly in order to ensure that indeed the network's operation mode is in accordance with the current location of the user equipment.

The geographical information that storage system 104 has stored may be understood to be indicative of both the geographical region 14, but also of the geographical region outside of the region 14. Following this interpretation, if the method of FIG. 2 is performed for user equipment 6, which is not within the geographical region 14, i.e. is within the area outside of the region 14, then, in one example, step 22 comprises determining that the location of user equipment 6 as indicated by location information is within the geographical region, wherein the geographical region is the area outside of region 14. Step 24 may then comprise controlling the operation mode of the network for serving the user equipment such that the operation mode is characterized by a set of one or more values of the respective one or more network performance parameters. This example illustrates that controlling the network's operation mode may comprise granting a user equipment access to a particular network slice only if it is outside of a particular region. In other words, if the user equipment is within region 14, then it may be denied access to a particular slice. In another example, if the user equipment is within region 14, then step 24 may comprise denying the user equipment access to the network altogether. In this example, the region 14 may be a restricted area and if a user carrying the user equipment enters the restricted area, the network can transmit a notification to the user equipment and deny access to the network altogether.

If user equipment 4 moves outside of the region 14, the data processing, in one embodiment, is configured to perform a step of obtaining updated location information indicative of a further location of the user equipment and a step of, based on the determination that the further location indicated by the further location information is outside of the geographical region 14, controlling the operation mode of the network for serving the user equipment such that the operation mode is characterized by a second set of one or more values of said respective one or more network performance parameters, the second set of one or more values being different from the first set of one or more values.

A user equipment as described herein may be understood to comprise a data processing system and a storage. In one aspect of this invention, the storage of the user equipment is suitable for storing the geographical information and the processor is configured to perform a number of steps that are illustrated by FIG. 3. Steps 20 and 22 are similar as referred to in FIG. 2. The user equipment obtains the location information and determines itself whether it is within or outside of the geographical region based on the geographical information that has been stored in the storage system of the user equipment. Then, step 26 comprises, based on this determination, transmitting a request to the communications network for being served by the communications network, wherein the request comprises an identifier indicating a requested operation mode of the communications network, wherein the requested operation mode is characterized by a set of one or more values of respective one or more network performance parameters. An identifier of an operation mode of the communications network as described herein may comprise an identifier of resources and/or network functions to be used. In a particular example, such an identifier may be a S-NSSAI as disclosed in the 5G standard ( 3GPP TS 23.501 V15.2.0 (2018-06)) or even a 5G QoS Identifier as disclosed in the 5G standard ( 3GPP TS 23.501 V15.2.0 (2018-06)).

If the user equipment has moved and subsequently determines that it is outside of the geographical region, then, in one embodiment, the user equipment may perform a step of (not shown) based on the determination that the location indicated by the location information is outside of the geographical region, transmitting to the communications network a further request for being served by the communications network, wherein the further request comprises a second identifier indicating a requested second operation mode of the communications network, wherein the second operation mode is characterized by a second set of one or more values of said respective one or more network performance parameters, different from the first set.

The processor of the user equipment may be configured to perform steps of determining that the user equipment is outside of the geographical region and, based on this determination, refrain from transmitting a request to the communications network, the request comprising the first identifier. Instead, the user equipment may then transmit a request comprising the second identifier described above. The user equipment may thus, in one example, first check whether its location allows access to a particular network slice before requesting access to that particular network slice. If its location is outside of the geographical region, it may transmit a request comprising another identifier of another operation mode, as a result of which the user equipment will be served with another operation mode.

FIG. 4 illustrates a more detailed embodiment of the method as performed by a data processing system for the communications network. In this embodiment the storage of the data processing system is suitable for storing a user equipment identifier, such as an international mobile subscriber identity (IMSI) number and/or a 5G Subscription Permanent Identifier as disclosed in the 5G standard ( 3GPP TS 23.501 V15.2.0 (2018-06)). In this embodiment, the processor of the data processing system is configured to perform a step 30 of receiving the user equipment identifier from the user equipment. This step may be performed as part of a procedure that is followed when the UE requests a service from the communications network, such as a request for establishment of a PDU session. Another step 32 of this embodiment comprises determining that a condition for controlling the network's operation mode for serving the user equipment such that the operation mode is characterized by the first set of one or more values, is met by determining that the equipment identifier received from the user equipment matches the equipment identifier stored in the storage system. Optionally, the equipment identifier is stored in the storage system in association with the above-described first identifier. In one embodiment, if this condition is not met, the communications network will refrain from controlling the network's function as requested. In this case, the data processing system may control the network's operation mode such that the operation mode is characterized by a second set of one or more values of network performance parameters, different from the first set of values, as is indicated by step 34. The second set of values may be lead to a lower or higher quality of service as experienced by the user equipment than the first set of values.

In one embodiment, the data processing system for the communications network is configured to perform steps of receiving a request from the user equipment to be served, the request comprising a first identifier of an operation mode characterized by a first set of values of network performance parameters. Then, the data processing system may determine that the user equipment is outside of the geographical region as indicated by geographical information that the data processing has stored in association with the first identifier and/or with the operation mode. Based on this determination, the processing system may refrain from controlling the operation mode such that it is characterized by the first set of values. Instead, the processing system may control the operation mode of the network to be a default mode. Optionally, in such situation, wherein a user equipment has requested an operation mode to which the user equipment does not have access based on its location being outside of the geographical region associated with that operation mode, the data processing system may transmit a notification to the owner of the communications network. Thus, in an example, the owner of a network slice is notified when a request of a user equipment for access to a network slice has been denied on the basis of the location of the user equipment being outside of the geographical region.

In one embodiment, the data processing system of the communications network and/or of the user equipment is configured to perform a step of obtaining accuracy information indicating the accuracy of the location information. In an example, the accuracy information indicates a method by which the location information was determined, for example by triangulation or by using a Global Positioning System (GPS) known in the art. In another example, the accuracy information indicates the strength as received of the signals that were used to determine the location information. One method for determining the location of the user equipment namely may be more accurate than the other. Another step comprises, based on the location information and based on the accuracy information, determining that the location indicated by the location information is within said geographical region. The accuracy information may indicate for each of a plurality of geographical locations/subregions, the probability that the user equipment is at that geographical location/subregion. The data processing optionally is configured to determine, based on the accuracy information, a probability that the user equipment is within the geographical region 14. If this probability exceeds a threshold probability, then the processor may determine that the user equipment is within the geographical region. If the probability is lower than the threshold probability, then the processor may determine that the user equipment is outside of the geographical region. In one example, the processor may determine a first probability that the user equipment is within the region 14 and a second probability that the user equipment is outside of the region 14 and based on a determination that the first probability is higher than the second probability, determining that the user equipment is within the region 14.

In one embodiment, if the probability that the user equipment is within geographical region 14 is lower than said threshold probability, yet higher than a second threshold probability, then the operation mode of the network may be controlled such that it is characterized by a further set of values of network performance parameters. This further set is different than the first set of values and may also be different than the second set of values, which second set may be characteristic of a default operation mode of the network.

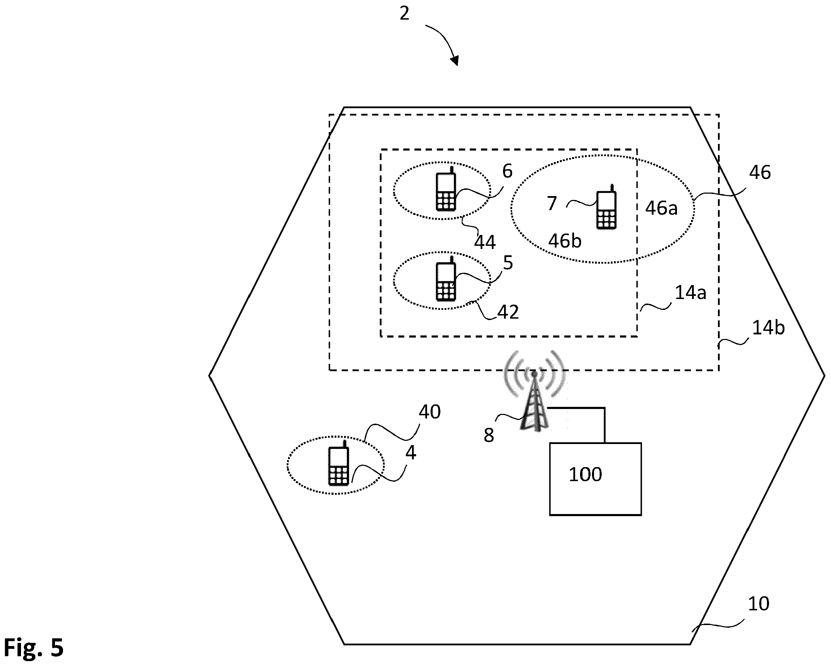

In FIG. 5, four user equipments 4, 5, 6 and 7 are within the cell 10 of base station 8 of communications network 2. The geographical region 14a is indicated as before. However, the respective locations of the user equipments 4, 5, 6, and 7 are best guesses and the accuracy of these locations differs per user equipment. The location as indicated by location information for user equipment 7is less accurate, for example because region 14a is located in an outdoor environment and because the locations of user equipments 4, 5, and 6 have been determined using GPS methods and the location of user equipment 7 has been determined using a triangulation method that involved information from at least three separate base stations (not shown). This reduced accuracy is illustrated by area 46 being larger than areas 40, 42 and 44 of the other user equipments. These areas may be understood to indicate the area in which the associated user equipment is likely to be with a certain likelihood, e.g. 90% or 100% likelihood. The location information may thus indicate a best guess location for the user equipment and the accuracy information may indicate a size of an area around this location. Then, determining whether a user equipment is inside or outside of the region 14a may comprise determining a size of the part 46b of the area 46, which part 46b lies within region 14a, determining that this size exceeds a threshold size and, based on this determination, determining that the user equipment 7 is within the geographical region. In another example, this determination comprises determining a ratio between a size of part 46b and part 46a, which part 46a lies outside of region 14a, determining that the ratio is higher than a threshold ratio and, based on this determination, determining that the user equipment 7 is within the geographical region 14a.

Thus, depending on selected thresholds, user equipment 7 may be determined to be within or outside of the geographical region 14a.

Assuming that the areas 40, 42, 44 and 46 indicate the areas in which the user equipment is likely to be with 90% certainty, and assuming that a user equipment is determined to be within region 14a if the accuracy information and location information indicate that the user equipment is within region 14a with at least 90% certainty, then the processor will determine that user equipments 5 and 6 are within region 14a and that user equipment 4 is outside of region 14a. For user equipment 7, this determination, since area 46 extends outside of region 14a, depends on the probability distribution within area 46. If this distribution is not known and/or assuming a uniformly distributed probability within region 46, then a processor may determine that user equipment 7 is outside of region 14a.

As explained above with reference to FIG. 4, the operation mode of the communications network for serving user equipment 5 may be characterized by different network performance parameter values than the operation mode of the communications network for serving user equipment 6. User equipment 5 may namely have a subscription to the communications network, whereas user equipment 6 may not. In particular, user equipment 5 may be registered as allowed to access a particular network slice and user equipment 6 may not.

It should be appreciated that several regions 14 may be defined. FIG. 5 illustrates a first region 14a and a second region 14b, wherein region 14b entirely covers region 14a. Following the same principles as above, user equipment 7 shall not be determined to be within region 14a, however, will be determined to be within region 14b, which could impact the network operation mode for serving user equipment 7. Defining such overlapping region allows to employ different operation modes for two user equipments, wherein one user equipment is certainly outside of the region, such as user equipment 4, and the other user equipment, such as user equipment 7, is uncertain to be within or outside of the geographical region. As such, an intermediate network performance can be provided to user equipments for which it cannot be determined with sufficient certainty that they are within or outside of the geographical region 14a.

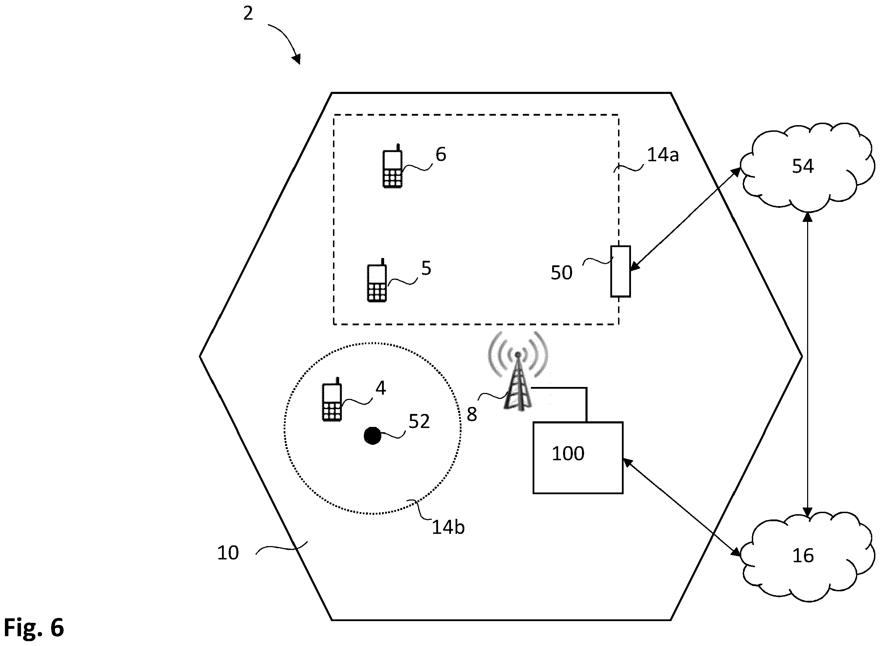

FIG. 6 illustrates a situation wherein a device is associated with region 14. In an example, such device is a WIFI access point 52 and region 14b is the coverage area of the WIFI access point 52. Such a device 52 may detect the presence of a user equipment in the sense that it detects that the user equipment is wirelessly connected to it. In another example, such device is a device 50 that is positioned at an entrance towards region 14a. Device 50 may be a device that is configured to control physical access to region 14a, such as a lock. Device 50 is configured to detect a presence of a user equipment. A device 50 may detect the presence of a user equipment in the sense that it detects that the user equipment passes through the entrance. In a particular example wherein the device 50 is configured to control physical access to region 14, the user equipment may be required to exchange information, e.g. by means of Near Field Communication, with the device 50 in order for a user of the user equipment to be granted access to region 14a. This information exchange for example causes a door lock to unlock or causes a turnstile to move herewith allowing the user to access region 14a.

In an embodiment wherein a processor of the user equipment itself determines whether it is within region 14, the user equipment may determine whether it has detected the device 50. In an embodiment wherein a processor of the communications network determines whether the user equipment is within region 14, the device 50,52 may be connected to a local network 54. Local network 54 may be an enterprise network, that may be connected to the internet 16 as indicated by the double arrows. Through these connections, the data processing system 100 can obtain an indication that the device 50, 52 has detected the presence of the user equipment. Based on this indication, the processor may determine that the user equipment is within a particular region 14a, 14b. The table below exemplifies geographical information in the form of device identifiers that indicate a particular geographical region and location information of user equipments in the form of indications whether the device has detected user equipments or not.

| **Area** | **Device(s) (Geo info)** | **Detected user equipment(s) (Location info)** |
|---|---|---|
| 14a | 50 | 5 |
| | | 6 |
| 14b | 54 | 4 |

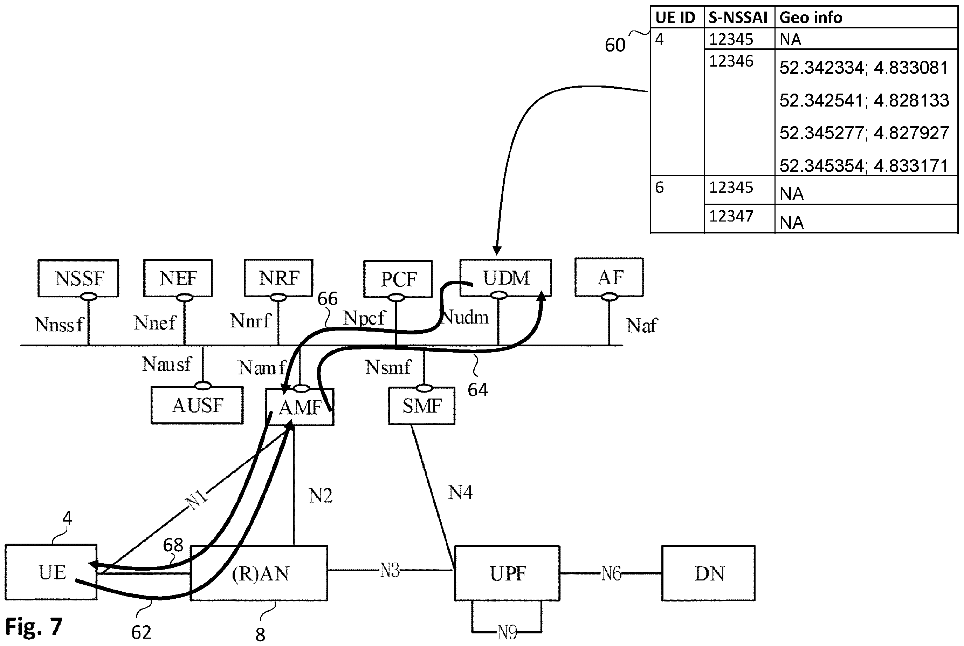

FIG. 7 depicts the 5G System architecture in the non-roaming case, using a reference point representation showing how various network functions interact with each other. The data processing system of the communications network may be configured to execute these network functions. To this end, the data processing system may comprise dedicated hardware. Additionally or alternatively, some of the network functions may be virtual network functions. The 5G standard ( 3GPP TS 23.501 V15.2.0 (2018-06)) comprises detailed explanations of the depicted network functions. FIG. 7 shows a user equipment 4 and a radio access network, which typically comprises a base station 8 as shown in FIGs 1, 5 and 6. Many terms as used herein are also explained in document "3GPP TR 21.905 V15.0.0 (2018-03)".

The 5G standard ( 3GPP TS 23.501 V15.2.0 (2018-06)) describes the following network functions, some of which are also shown in Fig. 7: Authentication Server Function (AUSF), Access and Mobility Management Function (AMF), Data Network (DN), e.g. operator services, Internet access or 3rd party services, Unstructured Data Storage Function (UDSF), Network Exposure Function (NEF), Network Repository Function (NRF), Network Slice Selection Function (NSSF), Policy Control Function (PCF), Session Management Function (SMF), Unified Data Management (UDM), Unified Data Repository (UDR), User Plane Function (UPF), Application Function (AF), User Equipment (UE), (Radio) Access Network ((R)AN), 5G-Equipment Identity Register (5G-EIR), Security Edge Protection Proxy (SEPP), Network Data Analytics Function (NWDAF).

"Nnssf" indicates a service interface exhibited by NSSF, "Nnef is a service interface exhibited by NEF, et cetera. FIG. 7 further shows N1, N2, N3, N4, N6, N9, which indicate so-called reference points.

The execution of these network functions may be understood to instantiate a particular network slice representing a first virtual network. Controlling the operation mode of the network may thus comprise executing certain network functions or not, in particular instantiating a network slice or not for serving the user equipment.
In one example, controlling the operation mode of the network for serving a user equipment may be performed by executing the following steps:
a) Receiving from a user equipment a request for one or more S-NSSAls, wherein an S-NSSAI stands for Single Network Slice Selection Assistance Information and may be understood to be an identifier that indicates an operation mode of the communications network, in particular that indicates a network slice. The requested one or more S-NSSAIs may be configured in the SIM and/or may be an S-NSSAI which the user equipment has last used to be successfully served by the network. A set of one or more S-NSSAIs may be referred to as an NSSAI.
b) The AMF handling the request comprising selecting one or more slices, and thus one or more S-NSSAI, to serve the user equipment. The AMF that is used may be the AMF that is first contacted in a Registration Procedure described in the 5G standard ( 3GPP TS 23.501 V15.2.0 (2018-06)). Typically, the AMF selects an NSSAI using the NSSF. However, if the AMF already has an Allowed NSSAI for the user equipment, e.g. because it has stored an identifier of the user equipment in association with the Allowed NSSAI, the AMF selects the NSSAI to serve the user equipment. It could also be that the AMF is configured to select an NSSAI even if it does not have an Allowed NSSAI for the user equipment.
c) Determining that the user equipment is subscribed to use a slice indicated by the Allowed NSSAI. This step may be performed by either one or both of the AMF and the UDM.
d) Determining that the network slice is supported in the user equipment's current Registration Area (Tracking Area list) as described in the 5G standard ( 3GPP TS 23.501 V15.2.0 (2018-06)). This step may be performed by the AMF. Additionally or alternatively, this step may be performed by the NSSF. The NSSF can also have additional policies to decide whether the user equipment can be assigned the slice. Based on operator deployment the AMF can be configured with simple Slice-TA mapping or the NSSF can be queried for policy based Slice-TA mapping.
e) Based on the determinations that the network slice is supported and that the user equipment is subscribed, the AMF assigning the slice to the user equipment and transmitting the Allowed NSSAI indicative of the slice to the user equipment. A slice can have a specific PCF associated to it, but a PCF can also serve multiple slices.
f) Receiving a request from the user equipment for establishing a Protocol Data Unit (PDU) session, the request comprising the S-NSSAI from the Allowed NSSAI.
g) Based on the Allowed NSSAI for the user equipment, assigning a 5G QoS Identifier (5QI) to the session. This step may be performed by the PCF that is specifically deployed for the slice.
h) The PCF signaling the assigned 5QI to the SMF and to the AMF.
i) Transmitting the 5Qi to the RAN and invoking suitable QoS control there.

The 5G standard ( 3GPP TS 23.501 V15.2.0 (2018-06)) in section 6.2.7 specifies the functionalities of Unified Data Management (UDM) which include User Identification Handling, Access authorization based on subscription data, Subscription management, etc.

In one embodiment, the UDM or Home Subscription Server (HSS, not shown in FIG. 7) has associated a user equipment with one or more subscribed slices, e.g. in the sense that it has stored a list. The subscribed slices may be understood to be the network slices to which the user equipment is entitled to access based on its subscription. Additionally, some of the slices associated with a user equipment may also be associated with geographical information as shown in list 60 of FIG. 7, which list may be stored by, or at least available to, the UDM/HSS. In the depicted example, the list comprises two user equipments 4 and 6 that are associated with different S-NSSAI, which may be understood to be identifiers of the respective slices and as identifiers of operation modes of the communications network. In this example, only S-NSSAI 12346 is associated with geographical information. This embodiment may then comprise, based on a request for NSSAI from a user equipment, this request being illustrated by arrow 62 in FIG. 7, the AMF invoking UDM (arrow 64) in order to determine the S-NSSAI that should be returned to the user equipment as allowed NSSAI. In this step, the AMF may receive an indication from the UDM/HSS that there is geographical information associated with an S-NSSAI to which the user equipment is entitled (arrow 66). With reference to FIG. 7, the AMF may thus receive an indication that user equipment 4 is subscribed to S-NSSAI 12346, but that S-NSSAI 12346 is associated with geographical information. In this step, the AMF may or may not receive the actual geographical information. Another step comprises, based on this indication, requesting location information indicating the location of the user equipment, e.g. from the LCS Location function as described in the 5G standard ( 3GPP TS 23.501 V15.2.0 (2018-06)), e.g. in section 4.4.4. Additionally or alternatively, obtaining the location information comprises inquiring the user equipment to report its location (indicated by arrow 68) and/or instructing the 5G localization services to retrieve user equipment's location and/or communicating with a local network, such as local network 54, where the user equipment has registered to retrieve UE's location. Several techniques such as GNSS, WLAN and Bluetooth based positioning methods [TS23.271 Section 4.3, more details could be found in TS25.305 and TS36.305] can be used to obtain the location information indicating the location of the user equipment. In case the AMF has received in step 66 the geographical information, a further step comprises, based on the obtained location information and based on the geographical information, the AMF determining that the user equipment's location is within the geographical region associated with the slice 12346. In case the UDM has not provided the geographical information to the AMF, the embodiment may comprise the AMF transmitting the location information to the UDM and the UDM determining that the user equipment is within the geographical region and the AMF being notified by the UDM that this is the case. The embodiment further comprises, based on the determination that the user equipment is within the geographical region, transmitting the identifier (S-NSSAI 12346) of that slice to the user equipment as part of the Allowed NSSAI (not shown).

In this embodiment, controlling the network's operation mode is thus performed by transmitting a particular S-NSSAI to the user equipment, which particular S-NSSAI the user equipment can use to request access to a network slice.

Additionally or alternatively, the location information could be communicated to the Network Slice Selection Function (NSSF) together with the S-NSSAI so the NSSF can determine whether the user equipment can be granted access to the slice. In this case, the NSSF may have stored the geographical information in association with the S-NSSAI (not shown).

The AMF can reject an S-NSSAI based on the location information provided by the different sources. As described above, in such case, a notification may be transmitted to the owner of the network slice. While a user equipment remains RM-REGISTERED in the PLMN, it preferably does not re-attempt to register to an S-NSSAI rejected in the current geographical Area until it detects significant location change.

In yet another embodiment, the user equipment may have stored the geographical information in association with a particular S-NSSAI. Once the user equipment receives the particular S-NSSAI (12346) as part of the Allowed NSSAI (see step f above), the user equipment may determine whether the received S-NSSAI (12346) matches an S-NSSAI (12346) stored in the user equipment in association with geographical information. Based on a determination that this is indeed the case, the user equipment may perform a step of determining that the user equipment is within the geographical region indicated by the geographical information and, based on this determination, use the particular S-NSSAI (12346) to request access to a slice. If the user equipment determines that it is outside of the region, it will refrain from using the particular S-NSSAI (12346) for requesting access to a slice. In an example, the user equipment has received, as part of the Allowed NSSAI, both S-NSSAIs 12345 and 12346. Since the user equipment will refrain from using 12346, it will use S-NSSAI 12345 in a request to be served by the network. Note that for S-NSSAI 12345 no associated geographical information is available. Hence, the user equipment will not need to check its location before using S-NSSAI 12345.

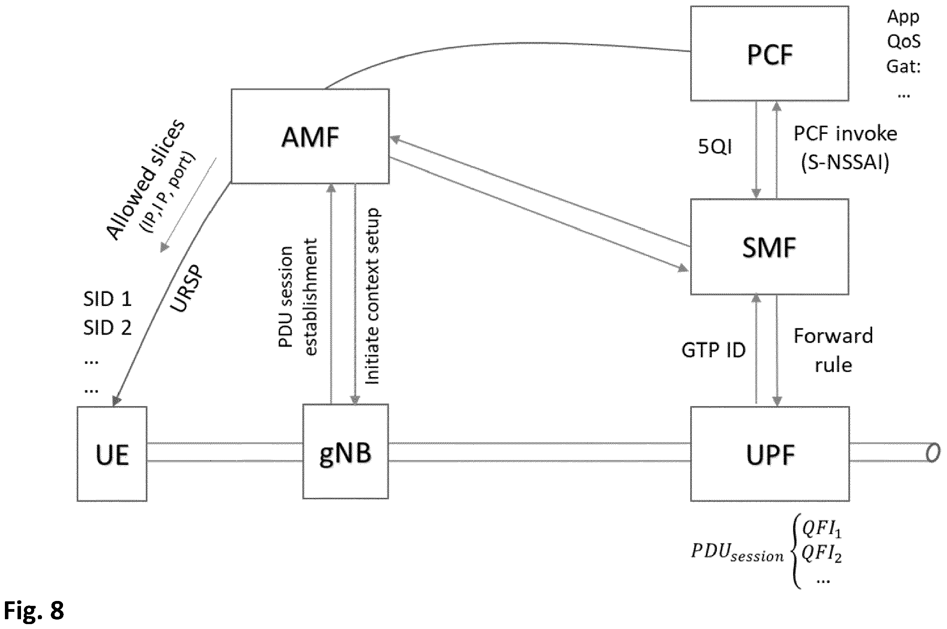

FIG. 8 illustrates an embodiment, wherein the PCF stores policy information such as configuration about allowed services, information access and QoS levels for a network slice, gating control information, etc. The PCF can communicate such access and mobility related policy information to the user equipment and RAN via the AMF as described in document "3GPP TS 23.503 V15.3.0 (2018-09)" Section 4.2.2. When a particular service is requested by the user equipment the PCF can control the operation mode of the network in order to provide this service by determining whether a particular slice will be used for the service or not (e.g. based on a defined rule involving geographical information in the set of rules for the Network Slice Selection Policy (NSSP) within the UE Route Selection Policy - URSP, see section 6.6.2 in TS 23.503). Further, the PCF can also communicate the information to the RAN (e.g. gNB that serves the UE) for providing the allowed Quality of Service for a specific QoS Flow. This is performed via the SMF and AMF in the form of 5QIs for the duration of a PDU session.

Gating control is typically performed by the UPF on a per service data flow basis. Controlling the network's operation mode may comprise executing QoS control, which could be applied in the Session Management function (SMF) where criteria such as the QoS subscription information may be used together with policy rules such as, service-based, subscription-based, or predefined PCF internal policies to derive the authorized QoS [TS 23.503 section 4.3.3]. Different QoS control for the specific slice can be achieved by deploying a PCF specific for the slice. Thus, whenever a user equipment establishes a PDU Session within a network slice, a PCF specific to that network slice will be queried by the SMF and will provide a 5QI which may be different for the same service in another slice where a different PCF is queried.

In one embodiment a node of the cellular communications network whose coverage area fully or partially contains the geographical region associated with a slice, broadcasts via an information element in a System Information Block (SIB) message both (i) an indication that the node supports the slice; and (ii) the geographical information, e.g. in the form of a specification of the slice's geographical boundaries. In its general specification, such a slice may have a 'geo' tag, which implies the above-mentioned cell-based broadcasting of its geo-constrained availability. A user equipment entering such a coverage area, the node supporting the slice and re-selecting it as a cell it camps on (idle mode) or is 'handovered to' (connected mode), may read the information element in the SIB message and hence learns that the cell supports the network slice. In case the user equipment has a configured preference to be connected to the slice if available, it may start to do repeated, e.g. continuous, measurements of its location and the accuracy thereof. If the user equipment determines that it is within the geographical region, then the user equipment may, for a currently active or a newly requested Packet Data Protocol (PDP) session, request access to the slice and optionally send along its estimated current location and the accuracy thereof.

In general, a PCF associated with a network slice may be automatically assigned to the PDP session, which in turn will assign either a default or an application-requested 5QI to the PDP session. The thus assigned 5QI may be signalled throughout the core and radio access network. In particular, the PDP session's 5QI is then also known to the radio resource assignment functions (incl. e.g. the packet scheduler) in the radio access network, which may use the 5QI to suitably assign resources and potentially preferred QoS treatment to the PDP session.

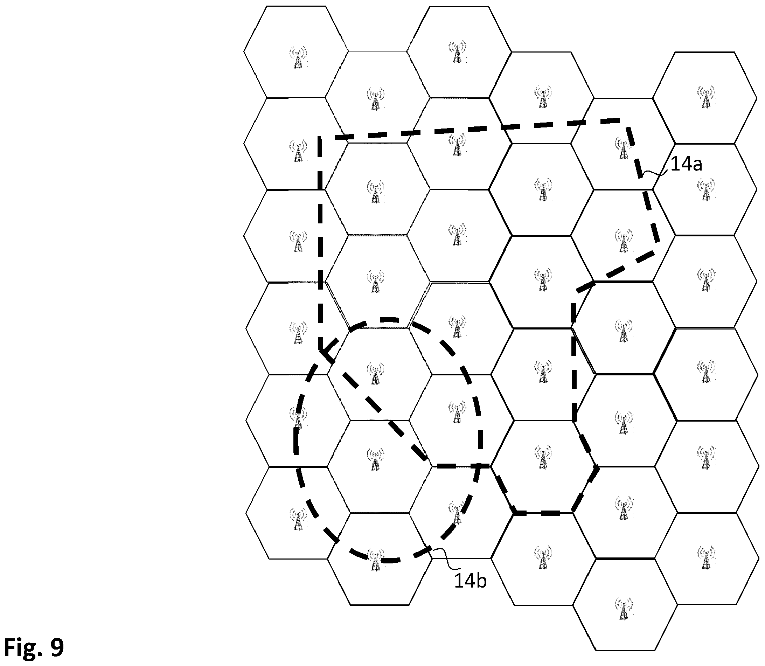

FIG. 9 illustrates that geographic regions may be defined independent of cell boundaries, may partly overlap each other, and may be larger than cells.

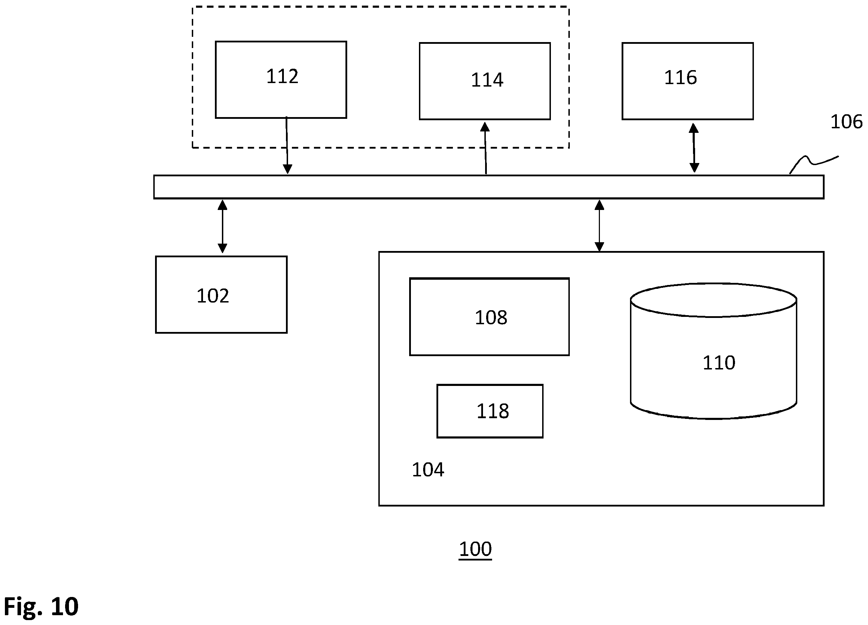

FIG. 10 depicts a block diagram illustrating an exemplary embodiment of a data processing system. As shown in FIG. 10, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in FIG. 10 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in FIG. 10, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in FIG. 10) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials and acts of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art within the scope of the present invention as defined by the appended claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A data processing system (100) for a cellular communications network (2), the network being configured to enable communication with a user equipment (4, 5, 6, 7), the data processing system being configured to
control an operation mode of the communications network for serving the user equipment, wherein the operation mode is **characterized by** a set of one or more values of respective one or more network performance parameters, **characterized in** the data processing system comprising
a storage system (104) for storing geographical information indicative of a geographical region, the geographical region being independent of the cellular configuration of the cellular communications network, and
a processor (102) configured to perform steps of:
- obtaining (20) location information indicative of a location of the user equipment;
- determining (22) that the location indicated by the location information is within the geographical region indicated by the geographical information stored in the storage system; and
- based on this determination, controlling (24) the operation mode for serving the user equipment such that the operation mode is **characterized by** a first set of one or more values of said respective one or more network performance parameters.

2. The data processing system according to claim 1, wherein the one or more network performance parameters comprise at least one of:
- a parameter indicating an amount of data processed per unit of time by the communications network for serving the user equipment, and
- a parameter indicating a latency induced by the network when the network is serving the user equipment, and
- a parameter indicating an amount of data per unit of time that has been successfully transmitted to and/or received from the user equipment, and
- a parameter indicating a probability that the latency induced by the network when the network is serving the user equipment, is lower or higher than a threshold value, and
- a parameter indicating a computational capacity that is reserved for serving the user equipment.

3. The data processing system according to claim 1 or 2, wherein the data processing system is configured to perform a step of:
- obtaining updated location information indicative of a further location of the user equipment, and
- determining that the further location is outside of the geographical region, and
- based on this determination, controlling the operation mode of the network for serving the user equipment such that the operation mode is **characterized by** a second set of one or more values of said respective one or more network performance parameters, the second set of one or more values being different from the first set of one or more values.

4. The data processing system according to one or more of the preceding claims, wherein
the communications network is configured to execute a first set of network functions that, when executed for serving the user equipment, causes the operation mode for serving the user equipment to be **characterized by** the first set of one or more values, and wherein
the step of controlling the operation mode comprises causing the execution of the first set of network functions.

5. The data processing system according to the preceding claim 4, wherein said network functions are virtualized network functions and wherein the first set of virtualized network functions, when executed, constitutes a first network slice instance representing a first virtual network.

6. The data processing system according to one or more of the preceding claims, wherein the step of controlling the operation mode of the network comprises granting the user equipment access to a particular network slice.

7. The data processing system according to one or more of the preceding claims, wherein
the operation mode **characterized by** said first set of one or more values is identified by a first identifier, and wherein the data storage is suitable for storing the geographical information in association with the first identifier, and wherein the step of controlling the operation mode of the communications network comprises transmitting the first identifier to the user equipment.

8. The data processing system according to one or more of the preceding claims, wherein the step of obtaining location information comprises
- receiving the location information, e.g. in the form of GPS coordinates, from the user equipment, and/or
- receiving the location information from a local network to which the user equipment is connected; and/or
- determining the location information based on parameters measured by the communications network.

9. The data processing system according to one or more of the preceding claims, wherein the data processing system is configured to perform steps of:
- obtaining accuracy information indicating the accuracy of the location information;
- based on the location information and based on the accuracy information, determining that the location indicated by the location information is within or outside of said geographical region.

10. The data processing system according to one or more of the preceding claims, wherein
the location information comprises an indication whether a device associated with the geographical region has detected a presence of the user equipment, and wherein determining that the location of the user equipment is within or outside of, respectively, the geographical region is performed by, based on said indication, determining that the device has or has not, respectively, detected the user equipment, and/or wherein
the location information comprises an indication whether the user equipment has detected a presence of a device associated with the geographical region, and wherein determining that the location of the user equipment is within or outside of, respectively, the geographical region is performed by, based on said indication, determining that user equipment has or has not, respectively, detected the device.

11. The data processing system according to one or more of the preceding claims, wherein the user equipment is identified by a user equipment identifier, and wherein
the storage system is suitable for storing the user equipment identifier, and wherein the data processing system is configured to perform steps of:
- receiving the user equipment identifier from the user equipment;
- determining that a condition for controlling the operation mode for serving the user equipment such that the operation mode is **characterized by** the first set of one or more values, is met by determining that the equipment identifier received from the user equipment matches the user equipment identifier stored in the storage system.

12. A user equipment (4) configured to connect to a cellular communications network (2) for enabling communication with the user equipment, the user equipment comprises a data processing system comprising
a storage for storing geographical information indicative of a geographical region, the geographical region being independent of the cellular configuration of the cellular communications network, and
a processor configured to perform steps of:
- obtaining (20) location information indicative of a location of the user equipment;
- determining (22) that the location indicated by the location information is within the geographical region indicated by the geographical information stored in said storage; and
- based on this determination, transmitting a request (26) to the communications network for being served by the communications network, wherein the request comprises an identifier indicating a requested operation mode of the communications network, wherein the requested operation mode is **characterized by** a set of one or more values of respective one or more network performance parameters.

13. The user equipment according to claim 12, wherein the data processing system is configured to perform steps of:
- obtaining updated location information indicative of a further location of the user equipment,
- determining that the further location is outside of the geographical region, and
- based on this determination, transmitting to the communications network a further request for being served by the communications network, wherein the further request comprises a second identifier indicating a requested second operation mode of the communications network, wherein the second requested operation mode is **characterized by** a second set of one or more values of said respective one or more network performance parameters, different from the first set.

14. The user equipment according to claim 12 or 13, wherein the step of obtaining location information comprises determining the location information using a Global Positioning System.

15. The user equipment according to one or more of the preceding claims 12-14, wherein the data processing system is configured to perform steps of:
- obtaining accuracy information indicating the accuracy of the location information;
- based on the location information and the accuracy information, determining that the location indicated by the location information is within or outside of said geographical region.

16. The user equipment according to one or more of the preceding claims 12-15, wherein
the location information comprises an indication whether a device associated with the geographical region has detected a presence of the user equipment, and wherein determining that the location of the user equipment is within or outside of, respectively, the geographical region is performed by, based on said indication, determining that the device has or has not, respectively, detected the user equipment, and/or wherein
the location information comprises an indication whether the user equipment has detected a presence of a device associated with the geographical region, and wherein determining that the location of the user equipment is within or outside of, respectively, the geographical region is performed by, based on said indication, determining that user equipment has or has not, respectively, detected the device.

17. A computer-implemented method performed by a data processing system of a cellular communications network configured to enable communication with a user equipment, the method comprising steps of:
- obtaining (20) location information indicative of a location of the user equipment;
- determining (22) that the location indicated by the location information is within a geographical region indicated by geographical information that is stored in a storage of a data processing system for the network, the geographical region being independent of the cellular configuration of the cellular communications network; and
- based on this determination, controlling (24) the operation mode of the communications network for serving the user equipment such that the operation mode is **characterized by** a first set of one or more values of said respective one or more network performance parameters.

18. A computer-implemented method performed by a processor of a user equipment configured to connect to a cellular communications network for enabling communication with the user equipment, the method comprising steps of
- obtaining (20 location information indicative of a location of the user equipment;
- determining (22) that the location indicated by the location information is within a geographical region indicated by the geographical information stored in a storage of the user equipment, the geographical region being independent of the cellular configuration of the cellular communications network; and
- based on this determination, transmitting (26) a request to the communications network for being served by the communications network, wherein the request comprises a first identifier indicating a requested operation mode of the communications network, wherein the requested operation mode is **characterized by** a first set of one or more values of respective one or more network performance parameters.

19. A computer program comprising instructions which, when the program is executed by a data processing system, cause the data processing system to perform the method according to claim 17 or 18.

20. A node (8) of a communications network (2), the node comprising a data processing system according to one or more of the preceding claims 1-11.

21. A communications network (2) comprising a data processing system according to one or more of the preceding claims 1-11.

## Patentansprüche

1. Datenverarbeitungssystem (100) für ein zellulares Kommunikationsnetz (2), wobei das Netz dafür ausgelegt ist, Kommunikation mit einem Benutzergerät (4, 5, 6, 7) zu ermöglichen, wobei das Datenverarbeitungssystem für folgende Vorgänge ausgelegt ist:
Steuern eines Betriebsmodus des Kommunikationsnetzes zum Versorgen des Benutzergeräts, wobei der Betriebsmodus durch einen Satz von einem oder mehreren Werten von einem jeweiligen einen oder mehreren Netzleistungsparametern **gekennzeichnet ist, dadurch** gekennzeichnet, dass das Datenverarbeitungssystem umfasst:
ein Speichersystem (104) zum Speichern geografischer Informationen, die eine geografische Region angeben, wobei die geografische Region unabhängig von der zellularen Auslegung des zellularen Kommunikationsnetzes ist, und
einen Prozessor (102), der zum Durchführen der folgenden Schritte ausgelegt ist:
- Erhalten (20) von Standortinformationen, die einen Standort des Benutzergeräts angeben;
- Bestimmen (22), dass der **durch** die Standortinformationen angegebene Standort innerhalb der geografischen Region liegt, die **durch** die im Speichersystem gespeicherten geografischen Informationen angegeben ist; und
- auf der Grundlage dieser Bestimmung, Steuern (24) des Betriebsmodus zum Versorgen des Benutzergeräts, derart, dass der Betriebsmodus **durch** einen ersten Satz von einem oder mehreren Werten des jeweiligen einen oder der mehreren Netzleistungsparameter gekennzeichnet ist.

2. Datenverarbeitungssystem nach Anspruch 1, wobei der eine oder die mehreren Netzleistungsparameter mindestens einen der folgenden Parameter umfassen:
- einen Parameter, der eine Datenmenge angibt, die pro Zeiteinheit durch das Kommunikationsnetz zum Versorgen des Benutzergeräts verarbeitet wird, und
- einen Parameter, der eine Latenz angibt, die durch das Netz beim Versorgen des Benutzergeräts verursacht wird, und
- einen Parameter, der eine Datenmenge pro Zeiteinheit angibt, die erfolgreich an das Benutzergerät übertragen und/oder von diesem empfangen wurde, und
- einen Parameter, der eine Wahrscheinlichkeit angibt, dass die durch das Netz induzierte Latenz beim Versorgen des Benutzergeräts niedriger oder höher als ein Schwellenwert ist, und
- einen Parameter, der eine Rechenkapazität angibt, die für das Versorgen des Benutzergeräts reserviert ist.

3. Datenverarbeitungssystem nach Anspruch 1 oder 2, wobei das Datenverarbeitungssystem zum Durchführen der folgenden Schritte ausgelegt ist:
- Erhalten von aktualisierten Standortinformationen, die einen weiteren Standort des Benutzergeräts angeben, und
- Bestimmen, dass der weitere Standort außerhalb der geografischen Region liegt, und
- auf der Grundlage dieser Bestimmung, Steuern des Betriebsmodus des Netzes zum Versorgen des Benutzergeräts derart, dass der Betriebsmodus durch einen zweiten Satz von einem oder mehreren Werten des jeweiligen einen oder der mehreren Netzleistungsparameter gekennzeichnet ist, wobei sich der zweite Satz von einem oder mehreren Werten vom ersten Satz von einem oder mehreren Werten unterscheidet.

4. Datenverarbeitungssystem nach einem oder mehreren der vorhergehenden Ansprüche, wobei
das Kommunikationsnetz dafür ausgelegt ist, einen ersten Satz von Netzfunktionen auszuführen, der bei seiner Ausführung zum Versorgen des Benutzergeräts bewirkt, dass der Betriebsmodus zum Versorgen des Benutzergeräts durch den ersten Satz von einem oder mehreren Werten gekennzeichnet wird, und wobei
der Schritt des Steuerns des Betriebsmodus das Bewirken der Ausführung des ersten Satzes von Netzfunktionen umfasst.

5. Datenverarbeitungssystem nach dem vorhergehenden Anspruch 4, wobei die Netzfunktionen virtualisierte Netzfunktionen sind und wobei der erste Satz von virtualisierten Netzfunktionen bei seiner Ausführung eine erste Netz-Slice-Instanz bildet, die ein erstes virtuelles Netz repräsentiert.

6. Datenverarbeitungssystem nach einem oder mehreren der vorhergehenden Ansprüche, wobei der Schritt des Steuerns des Betriebsmodus des Netzes das Gewähren des Zugangs des Benutzergeräts zu einer spezifischen Netz-Slice umfasst.

7. Datenverarbeitungssystem nach einem oder mehreren der vorhergehenden Ansprüche, wobei der Betriebsmodus, der durch den ersten Satz von einem oder mehreren Werten **gekennzeichnet ist, durch** eine erste Kennung identifiziert wird, und wobei der Datenspeicher geeignet ist, die geografischen Informationen in Verbindung mit der ersten Kennung zu speichern, und wobei der Schritt des Steuerns des Betriebsmodus des Kommunikationsnetzes das Übertragen der ersten Kennung an das Benutzergerät umfasst.

8. Datenverarbeitungssystem nach einem oder mehreren der vorhergehenden Ansprüche, wobei der Schritt des Erhaltens von Standortinformationen folgende Vorgänge umfasst:
- Empfangen der Standortinformationen, z. B. in Form von GPS-Koordinaten, vom Benutzergerät, und/oder
- Empfangen der Standortinformationen von einem lokalen Netz, mit dem das Benutzergerät verbunden ist; und/oder
- Bestimmen der Standortinformationen auf der Grundlage der vom Kommunikationsnetz gemessenen Parameter.

9. Datenverarbeitungssystem nach einem oder mehreren der vorhergehenden Ansprüche, wobei das Datenverarbeitungssystem zum Durchführen der folgenden Schritte ausgelegt ist:
- Erhalten von Genauigkeitsinformationen, die die Genauigkeit der Standortinformationen angeben;
- auf der Grundlage der Standortinformationen und auf der Grundlage der Genauigkeitsinformationen, Bestimmen, dass der durch die Standortinformationen angegebene Standort innerhalb oder außerhalb der geografischen Region liegt.

10. Datenverarbeitungssystem nach einem oder mehreren der vorhergehenden Ansprüche,
wobei die Standortinformationen eine Angabe umfassen, ob eine Vorrichtung, die der geografischen Region zugeordnet ist, eine Anwesenheit des Benutzergeräts erfasst hat, und wobei das Bestimmen, dass der Standort des Benutzergeräts innerhalb bzw. außerhalb der geografischen Region liegt, durch die auf der Angabe basierende Bestimmung erfolgt, dass die Vorrichtung das Benutzergerät erfasst hat bzw. nicht erfasst hat, und/oder wobei
die Standortinformationen eine Angabe umfassen, ob das Benutzergerät eine Anwesenheit einer Vorrichtung, die der geografischen Region zugeordnet ist, erfasst hat, und wobei das Bestimmen, dass der Standort des Benutzergeräts innerhalb bzw. außerhalb der geografischen Region liegt, durch die auf der Angabe basierende Bestimmung erfolgt, dass das Benutzergerät die Vorrichtung erfasst hat bzw. nicht erfasst hat.

11. Datenverarbeitungssystem nach einem oder mehreren der vorhergehenden Ansprüche, wobei das Benutzergerät durch eine Benutzergerätekennung identifiziert wird, und wobei
das Speichersystem geeignet ist, die Benutzergerätekennung zu speichern, und wobei das Datenverarbeitungssystem zum Durchführen der folgenden Schritte ausgelegt ist:
- Empfangen der Benutzergerätekennung vom Benutzergerät;
- Bestimmen, dass eine Bedingung zum Steuern des Betriebsmodus zum Versorgen des Benutzergeräts, derart, dass der Betriebsmodus durch den ersten Satz von einem oder mehreren Werten gekennzeichnet ist, erfüllt ist, durch Bestimmen, dass die vom Benutzergerät empfangene Gerätekennung mit der im Speichersystem gespeicherten Benutzergerätekennung übereinstimmt.

12. Benutzergerät (4), das dafür ausgelegt ist, mit einem zellularen Kommunikationsnetz (2) zum Ermöglichen von Kommunikation mit dem Benutzergerät verbunden zu sein, wobei das Benutzergerät ein Datenverarbeitungssystem umfasst, das folgende Elemente umfasst:
einen Speicher zum Speichern geografischer Informationen, die eine geografische Region angeben,
wobei die geografische Region unabhängig von der zellularen Auslegung des zellularen Kommunikationsnetzes ist, und
einen Prozessor, der zum Durchführen der folgenden Schritte ausgelegt ist:
- Erhalten (20) von Standortinformationen, die einen Standort des Benutzergeräts angeben;
- Bestimmen (22), dass der durch die Standortinformationen angegebene Standort innerhalb der geografischen Region liegt, die durch die im Speicher gespeicherten geografischen Informationen angegeben ist; und
- auf der Grundlage dieser Bestimmung, Senden einer Anforderung (26) an das Kommunikationsnetz, vom Kommunikationsnetz versorgt zu werden, wobei die Anforderung eine Kennung umfasst, die einen angeforderten Betriebsmodus des Kommunikationsnetzes angibt, wobei der angeforderte Betriebsmodus durch einen Satz von einem oder mehreren Werten von jeweiligen einem oder mehreren Netzleistungsparametern gekennzeichnet ist.

13. Benutzergerät nach Anspruch 12, wobei das Datenverarbeitungssystem zum Durchführen der folgenden Schritte ausgelegt ist:
- Erhalten von aktualisierten Standortinformationen, die einen weiteren Standort des Benutzergeräts angeben,
- Bestimmen, dass der weitere Standort außerhalb der geografischen Region liegt, und
- auf der Grundlage dieser Bestimmung, Senden einer weiteren Anforderung an das Kommunikationsnetz, vom Kommunikationsnetz versorgt zu werden, wobei die weitere Anforderung eine zweite Kennung umfasst, die einen angeforderten zweiten Betriebsmodus des Kommunikationsnetzes angibt, wobei der zweite angeforderte Betriebsmodus durch einen zweiten Satz von einem oder mehreren Werten des jeweiligen einen oder der mehreren Netzleistungsparameter gekennzeichnet ist, der sich vom ersten Satz unterscheidet.

14. Benutzergerät nach Anspruch 12 oder 13, wobei der Schritt des Erhaltens von Standortinformationen das Bestimmen der Standortinformationen unter Verwendung eines "Global Positioning System" umfasst.

15. Benutzergerät nach einem oder mehreren der vorhergehenden Ansprüche 12 bis 14, wobei das Datenverarbeitungssystem zum Durchführen der folgenden Schritte ausgelegt ist:
- Erhalten von Genauigkeitsinformationen, die die Genauigkeit der Standortinformationen angeben;
- auf der Grundlage der Standortinformationen und der Genauigkeitsinformationen, Bestimmen, dass der durch die Standortinformationen angegebene Standort innerhalb oder außerhalb der geografischen Region liegt.

16. Benutzergerät nach einem oder mehreren der vorhergehenden Ansprüche 12 bis 15, wobei
die Standortinformationen eine Angabe umfassen, ob eine Vorrichtung, die der geografischen Region zugeordnet ist, eine Anwesenheit des Benutzergeräts erfasst hat, und wobei das Bestimmen, dass der Standort des Benutzergeräts innerhalb bzw. außerhalb der geografischen Region liegt, durch die auf der Angabe basierende Bestimmung erfolgt, dass die Vorrichtung das Benutzergerät erfasst hat bzw. nicht erfasst hat, und/oder wobei
die Standortinformationen eine Angabe umfassen, ob das Benutzergerät eine Anwesenheit einer Vorrichtung, die der geografischen Region zugeordnet ist, erfasst hat, und wobei das Bestimmen, dass der Standort des Benutzergeräts innerhalb bzw. außerhalb der geografischen Region liegt, durch die auf der Angabe basierende Bestimmung erfolgt, dass das Benutzergerät die Vorrichtung erfasst hat bzw. nicht erfasst hat.

17. Computerimplementiertes Verfahren, das von einem Datenverarbeitungssystem eines zellularen Kommunikationsnetzes ausgeführt wird, das dafür ausgelegt ist, Kommunikation mit einem Benutzergerät zu ermöglichen, wobei das Verfahren die folgenden Schritte umfasst:
- Erhalten (20) von Standortinformationen, die einen Standort des Benutzergeräts angeben;
- Bestimmen (22), dass der durch die Standortinformationen angegebene Standort innerhalb einer geografischen Region liegt, die durch geografische Informationen angegeben wird, die in einem Speicher eines Datenverarbeitungssystems für das Netz gespeichert sind, wobei die geografische Region unabhängig von der zellularen Auslegung des zellularen Kommunikationsnetzes ist; und
- auf der Grundlage dieser Bestimmung, Steuern (24) des Betriebsmodus des Kommunikationsnetzes zum Versorgen des Benutzergeräts, derart, dass der Betriebsmodus durch einen ersten Satz von einem oder mehreren Werten des jeweiligen einen oder der mehreren Netzleistungsparameter gekennzeichnet ist.

18. Computerimplementiertes Verfahren, das von einem Prozessor eines Benutzergeräts ausgeführt wird, das dafür ausgelegt ist, mit einem zellularen Kommunikationsnetz zum Ermöglichen von Kommunikation mit dem Benutzergerät verbunden zu sein, wobei das Verfahren die folgenden Schritte umfasst:
- Erhalten (20) von Standortinformationen, die einen Standort des Benutzergeräts angeben;
- Bestimmen (22), dass der durch die Standortinformationen angegebene Standort innerhalb einer geografischen Region liegt, die durch die in einem Speicher des Benutzergeräts gespeicherten geografischen Informationen angegeben ist, wobei die geografische Region unabhängig von der zellularen Auslegung des zellularen Kommunikationsnetzes ist; und
- auf der Grundlage dieser Bestimmung, Senden (26) einer Anforderung an das Kommunikationsnetz, vom Kommunikationsnetz versorgt zu werden, wobei die Anforderung eine erste Kennung umfasst, die einen angeforderten Betriebsmodus des Kommunikationsnetzes angibt, wobei der angeforderte Betriebsmodus durch einen ersten Satz von einem oder mehreren Werten von jeweiligen einem oder mehreren Netzleistungsparametern gekennzeichnet ist.

19. Computerprogramm, umfassend Anweisungen, die bei Ausführung des Programms durch ein Datenverarbeitungssystem das Datenverarbeitungssystem veranlassen, das Verfahren nach Anspruch 17 oder 18 durchzuführen.

20. Knoten (8) eines Kommunikationsnetzes (2), wobei der Knoten ein Datenverarbeitungssystem nach einem oder mehreren der vorhergehenden Ansprüche 1 bis 11 umfasst.

21. Kommunikationsnetz (2), umfassend ein Datenverarbeitungssystem nach einem oder mehreren der vorhergehenden Ansprüche 1 bis 11.

## Revendications

1. Système de traitement de données (100) pour un réseau de communication cellulaire (2), le réseau étant configuré pour permettre une communication avec un équipement d'utilisateur (4, 5, 6, 7), le système de traitement de données étant configuré pour
commander un mode de fonctionnement du réseau de communication pour desservir l'équipement d'utilisateur, dans lequel le mode de fonctionnement est **caractérisé par** un ensemble d'une ou de plusieurs valeurs d'un ou de plusieurs paramètres de performance de réseau respectifs, **caractérisé en ce que** le système de traitement de données comprend :
un système de stockage (104) pour stocker une information géographique indicative d'une région géographique, la région géographique étant indépendante de la configuration cellulaire du réseau de communication cellulaire, et
un processeur (102) configuré pour réaliser les étapes comprenant :
- l'obtention (20) d'une information de localisation indicative d'une localisation de l'équipement d'utilisateur ;
- la détermination (22) du fait que la localisation indiquée par l'information de localisation est à l'intérieur de la région géographique indiquée par l'information géographique stockée dans le système de stockage ; et
- sur la base de cette détermination, la commande (24) du mode de fonctionnement pour desservir l'équipement d'utilisateur de telle sorte que le mode de fonctionnement soit **caractérisé par** un premier ensemble d'une ou de plusieurs valeurs desdits un ou plusieurs paramètres de performance de réseau respectifs.

2. Système de traitement de données selon la revendication 1, dans lequel les un ou plusieurs paramètres de performance de réseau comprennent au moins un paramètre parmi :
- un paramètre indiquant une quantité de données traitées par unité de temps par le réseau de communication pour desservir l'équipement d'utilisateur, et
- un paramètre indiquant une latence induite par le réseau lorsque le réseau est en train de desservir l'équipement d'utilisateur, et
- un paramètre indiquant une quantité de données par unité de temps qui ont été émises et/ou reçues avec succès sur et/ou depuis l'équipement d'utilisateur, et
- un paramètre indiquant une probabilité que la latence induite par le réseau lorsque le réseau est en train de desservir l'équipement d'utilisateur soit inférieure ou supérieure à une valeur de seuil, et
- un paramètre indiquant une capacité informatique qui est réservée pour desservir l'équipement d'utilisateur.

3. Système de traitement de données selon la revendication 1 ou 2, dans lequel le système de traitement de données est configuré pour réaliser une étape comprenant :
- l'obtention d'une information de localisation mise à jour indicative d'une autre localisation de l'équipement d'utilisateur, et
- la détermination du fait que l'autre localisation est à l'extérieur de la région géographique, et
- sur la base de cette détermination, la commande du mode de fonctionnement du réseau pour desservir l'équipement d'utilisateur de telle sorte que le mode de fonctionnement soit **caractérisé par** un second ensemble d'une ou de plusieurs valeurs desdits un ou plusieurs paramètres de performance de réseau respectifs, le second ensemble d'une ou de plusieurs valeurs étant différent du premier ensemble d'une ou de plusieurs valeurs.

4. Système de traitement de données selon une ou plusieurs des revendications précédentes, dans lequel
le réseau de communication est configuré pour exécuter un premier ensemble de fonctions de réseau qui, lorsqu'il est exécuté pour desservir l'équipement d'utilisateur, a pour effet que le mode de fonctionnement pour desservir l'équipement d'utilisateur est **caractérisé par** le premier ensemble d'une ou de plusieurs valeurs, et dans lequel
l'étape de commande du mode de fonctionnement comprend le fait de forcer l'exécution du premier ensemble de fonctions de réseau.

5. Système de traitement de données selon la revendication précédente 4, dans lequel lesdites fonctions de réseau sont des fonctions de réseau virtualisées et dans lequel le premier ensemble de fonctions de réseau virtualisées, lorsqu'il est exécuté, constitue une première instance de tranche de réseau représentant un premier réseau virtuel.

6. Système de traitement de données selon une ou plusieurs des revendications précédentes, dans lequel l'étape de commande du mode de fonctionnement du réseau comprend l'octroi à l'équipement d'utilisateur d'un accès à une tranche de réseau particulière.

7. Système de traitement de données selon une ou plusieurs des revendications précédentes, dans lequel
le mode de fonctionnement **caractérisé par** ledit premier ensemble d'une ou de plusieurs valeurs est identifié par un premier identifiant, et dans lequel le stockage de données est approprié pour stocker l'information géographique en association avec le premier identifiant, et dans lequel l'étape de commande du mode de fonctionnement du réseau de communication comprend l'émission du premier identifiant sur l'équipement d'utilisateur.

8. Système de traitement de données selon une ou plusieurs des revendications précédentes, dans lequel l'étape d'obtention de l'information de localisation comprend
- la réception de l'information de localisation, par exemple sous la forme de coordonnées GPS, en provenance de l'équipement d'utilisateur, et/ou
- la réception de l'information de localisation en provenance d'un réseau local auquel l'équipement d'utilisateur est connecté, et/ou
- la détermination de l'information de localisation sur la base de paramètres mesurés par le réseau de communication.

9. Système de traitement de données selon une ou plusieurs des revendications précédentes, dans lequel le système de traitement de données est configuré pour réaliser les étapes comprenant :
- l'obtention d'une information de précision indiquant la précision de l'information de localisation ;
- sur la base de l'information de localisation et sur la base de l'information de précision, la détermination du fait que la localisation indiquée par l'information de localisation est à l'intérieur ou à l'extérieur de ladite région géographique.

10. Système de traitement de données selon une ou plusieurs des revendications précédentes, dans lequel
l'information de localisation comprend une indication de si un dispositif associé à la région géographique a détecté une présence de l'équipement d'utilisateur, et dans lequel la détermination du fait que la localisation de l'équipement d'utilisateur est à l'intérieur ou à l'extérieur, respectivement, de la région géographique est réalisée en, sur la base de ladite indication, déterminant que le dispositif a ou n'a pas, respectivement, détecté l'équipement d'utilisateur, et/ou dans lequel
l'information de localisation comprend une indication de si l'équipement d'utilisateur a détecté une présence d'un dispositif associé à la région géographique, et dans lequel la détermination du fait que la localisation de l'équipement d'utilisateur est à l'intérieur ou à l'extérieur, respectivement, de la région géographique est réalisée en, sur la base de ladite indication, déterminant que l'équipement d'utilisateur a ou n'a pas, respectivement, détecté le dispositif.

11. Système de traitement de données selon une ou plusieurs des revendications précédentes, dans lequel l'équipement d'utilisateur est identifié par un identifiant d'équipement d'utilisateur, et dans lequel
le système de stockage est approprié pour stocker l'identifiant d'équipement d'utilisateur, et dans lequel le système de traitement de données est configuré pour réaliser les étapes comprenant :
- la réception de l'identifiant d'équipement d'utilisateur en provenance de l'équipement d'utilisateur ;
- la détermination du fait qu'une condition pour commander le mode de fonctionnement pour desservir l'équipement d'utilisateur de telle sorte que le mode de fonctionnement soit **caractérisé par** le premier ensemble d'une ou de plusieurs valeurs est satisfaite en déterminant que l'identifiant d'équipement reçu depuis l'équipement d'utilisateur correspond à l'identifiant d'équipement d'utilisateur stocké dans le système de stockage.

12. Équipement d'utilisateur (4) configuré pour être connecté sur un réseau de communication cellulaire (2) pour permettre une communication avec l'équipement d'utilisateur, l'équipement d'utilisateur comprend un système de traitement de données comprenant
un stockage pour stocker une information géographique indicative d'une région géographique, la région géographique étant indépendante de la configuration cellulaire du réseau de communication cellulaire, et
un processeur configuré pour réaliser les étapes comprenant :
- l'obtention (20) d'une information de localisation indicative d'une localisation de l'équipement d'utilisateur ;
- la détermination (22) du fait que la localisation indiquée par l'information de localisation est à l'intérieur de la région géographique indiquée par l'information géographique stockée dans ledit stockage ; et
- sur la base de cette détermination, l'émission d'une demande (26) sur le réseau de communication pour une desserte par le réseau de communication, dans lequel la demande comprend un identifiant indiquant un mode de fonctionnement demandé du réseau de communication, dans lequel le mode de fonctionnement demandé est **caractérisé par** un ensemble d'une ou de plusieurs valeurs d'un ou de plusieurs paramètres de performance de réseau respectifs.

13. Équipement d'utilisateur selon la revendication 12, dans lequel le système de traitement de données est configuré pour réaliser les étapes comprenant :
- l'obtention d'une information de localisation mise à jour indicative d'une autre localisation de l'équipement d'utilisateur,
- la détermination du fait que l'autre localisation est à l'extérieur de la région géographique, et
- sur la base de cette détermination, l'émission sur le réseau de communication d'une autre demande pour une desserte par le réseau de communication, dans lequel l'autre demande comprend un second identifiant indiquant un second mode de fonctionnement demandé du réseau de communication, dans lequel le second mode de fonctionnement demandé est **caractérisé par** un second ensemble d'une ou de plusieurs valeurs desdits un ou plusieurs paramètres de performance de réseau respectifs, différent du premier ensemble.

14. Équipement d'utilisateur selon la revendication 12 ou 13, dans lequel l'étape d'obtention d'une information de localisation comprend la détermination de l'information de localisation en utilisant un système mondial de positionnement/GPS.

15. Équipement d'utilisateur selon une ou plusieurs des revendications précédentes 12 à 14, dans lequel le système de traitement de données est configuré pour réaliser les étapes comprenant :
- l'obtention d'une information de précision indiquant la précision de l'information de localisation ;
- sur la base de l'information de localisation et de l'information de précision, la détermination du fait que la localisation indiquée par l'information de localisation est à l'intérieur ou à l'extérieur de ladite région géographique.

16. Équipement d'utilisateur selon une ou plusieurs des revendications précédentes 12 à 15, dans lequel
l'information de localisation comprend une indication de si un dispositif associé à la région géographique a détecté une présence de l'équipement d'utilisateur, et dans lequel la détermination du fait que la localisation de l'équipement d'utilisateur est à l'intérieur ou à l'extérieur, respectivement, de la région géographique est réalisée en, sur la base de ladite indication, déterminant que le dispositif a ou n'a pas, respectivement, détecté l'équipement d'utilisateur, et/ou dans lequel
l'information de localisation comprend une indication de si l'équipement d'utilisateur a détecté une présence d'un dispositif associé à la région géographique, et dans lequel la détermination du fait que la localisation de l'équipement d'utilisateur est à l'intérieur ou à l'extérieur, respectivement, de la région géographique est réalisée en, sur la base de ladite indication, déterminant que l'équipement d'utilisateur a ou n'a pas, respectivement, détecté le dispositif.

17. Procédé mis en œuvre par ordinateur réalisé par un système de traitement de données d'un réseau de communication cellulaire configuré pour permettre une communication avec un équipement d'utilisateur, le procédé comprenant les étapes comprenant :
- l'obtention (20) d'une information de localisation indicative d'une localisation de l'équipement d'utilisateur ;
- la détermination (22) du fait que la localisation indiquée par l'information de localisation est à l'intérieur d'une région géographique indiquée par l'information géographique qui est stockée dans un stockage d'un système de traitement de données pour le réseau, la région géographique étant indépendante de la configuration cellulaire du réseau de communication cellulaire ; et
- sur la base de cette détermination, la commande (24) du mode de fonctionnement du réseau de communication pour desservir l'équipement d'utilisateur de telle sorte que le mode de fonctionnement soit **caractérisé par** un premier ensemble d'une ou de plusieurs valeurs desdits un ou plusieurs paramètres de performance de réseau respectifs.

18. Procédé mis en œuvre par ordinateur réalisé par un processeur d'un équipement d'utilisateur configuré pour être connecté sur un réseau de communication cellulaire pour permettre une communication avec l'équipement d'utilisateur, le procédé comprenant les étapes comprenant
- l'obtention (20) d'une information de localisation indicative d'une localisation de l'équipement d'utilisateur ;
- la détermination (22) du fait que la localisation indiquée par l'information de localisation est à l'intérieur d'une région géographique indiquée par l'information géographique stockée dans un stockage de l'équipement d'utilisateur, la région géographique étant indépendante de la configuration cellulaire du réseau de communication cellulaire ; et
- sur la base de cette détermination, l'émission (26) d'une demande sur le réseau de communication pour une desserte par le réseau de communication, dans lequel la demande comprend un premier identifiant indiquant un mode de fonctionnement demandé du réseau de communication, dans lequel le mode de fonctionnement demandé est **caractérisé par** un premier ensemble d'une ou de plusieurs valeurs d'un ou de plusieurs paramètres de performance de réseau respectifs.

19. Programme informatique comprenant des instructions qui, lorsque le programme est exécuté par un système de traitement de données, forcent le système de traitement de données à réaliser le procédé selon la revendication 17 ou 18.

20. Noeud (8) d'un réseau de communication (2), le noeud comprenant un système de traitement de données selon une ou plusieurs des revendications précédentes 1 à 11.

21. Réseau de communication (2) comprenant un système de traitement de données selon une ou plusieurs des revendications précédentes 1 à 11.
